# EUROPEAN PATENT SPECIFICATION

(11) **EP 4 172 693 B1**
(45) Date of publication and mention of the grant of the patent: **29.07.2026**
(21) Application number: 21735257.4
(22) Date of filing: 22.06.2021
(51) Int. Cl.: G03B 17/00, G03B 17/02, G03B 17/56

(54) **CAMERA SYSTEM WITH LENS HEATER**
KAMERASYSTEM MIT LINSENHEIZUNG
SYSTÈME DE CAMÉRA AVEC CHAUFFE-OBJECTIF

(30) Priority: 30.06.2020 SE 2050801
(43) Date of publication of application: 03.05.2023
(73) Proprietor: Orlaco Products B.V., 3772 MN Barneveld (NL)
(72) Inventor: VAN DEN BRINK, Alfred, 3771 RN Barneveld (NL)
(74) Representative: Bergenstråhle & Partners AB
(86) International application number: PCT/EP2021/066929
(87) International publication number: WO 2022/002681

(56) References cited:
- WO-A1-2017/142203
- CN-A- 109 828 425
- CN-U- 202 003 121
- US-A1- 2018 176 431
- US-A1- 2019 041 630

## Description

### Technical field

The present invention relates generally to a camera system comprising a lens heater.

### Background art

It is known to use camera modules comprising a heating unit configured to heat a lens unit wherein a heat insulation layer embeds the heating unit.

In other known solutions for camera modules comprising a heating unit, conductive layers may be provided on the surface of the lens.

A drawback of known solutions is that the heaters would inefficiently and/or insufficiently heat a front lens exposed to the external or outside environment subject to rough and cold conditions. Inefficient heating may fail to comply with strict requirements of e.g. defrosting front lenses in extreme conditions and within defined time thresholds. Inefficient heating may further lead to an unwanted high power consumption for instance through the dissipation of heat. Another drawback of the prior art is that the use of a conductive layer on the lens have an adverse effect on the optical light transmission through the lens.

US 2019/041630 A1 discloses a lens heating device where the lens is in thermal contact with the heating element but heat is also transported to surrounding elements of the camera.

### Summary of invention

An object of the present invention is to alleviate some of the disadvantages of the prior art and to provide a camera system comprising a heater device that provides a more efficient heating of the front lens.

According to one embodiment of the invention, a camera system according to claim 1 is provided.

According to one embodiment, the lens heater 510 comprises a transparent conductive coating 512 provided on at least a portion 4a' of the inner surface 4a of the front lens 4.

According to one embodiment, said at least a portion 4a' of the inner surface 4a of the front lens 4 is a sub-portion of the inner surface 4a of the front lens 4, wherein the transparent conductive coating is provided solely on the sub-portion of the inner surface 4a of the front lens.

According to one embodiment, the lens heater 510 comprises an annular heater disc 511, wherein the annular heater disc 511 is arranged between the annular heat insulating device 6 and said at least a portion of the inner surface 4a of the front lens 4 and is configured to provide an electrical connection to the transparent conductive coating.

According to one embodiment, the transparent conductive coating 512 is indium tin oxide (ITO).

According to one embodiment, the transparent conductive coating is a resistive pattern coating 513 provided on the inner surface 4a of the front lens 4.

According to one embodiment, the lens heater 510 comprises a transparent heater film 514 provided on the inner surface 4a of the front lens 4.

According to one embodiment, the heater device 500 further comprises a heater driver 520 and a heater connector 550, wherein the heater connector 550 connects the heater driver 520 with the front lens 4 via contact pads 551 arranged on the transparent conductive coating 512, wherein the heater connector 550 comprises connecting pins 552a, 552b.

According to one embodiment, the heater device 500 further comprises a heater driver 520 and a heater connector 505, wherein the heater connector 550 connects the heater driver 520 with the annular heater disc 511, wherein the heater connector comprises connecting pins 552a, 552b or an FPC connector 555.

According to one embodiment, the annular heat insulating device 6 has an annular disc shape.

According to one embodiment, the heat insulating device 6 is an O-ring.

According to one embodiment, a hydrophobic coating 15 is provided on an outer surface 4b of the front lens 4.

According to one example, not part of the invention, the image capturing device 1 further comprises a lens mount portion 9 for mounting the lens barrel 3 within the camera housing portion 2, wherein a second annular portion 32 of the lens barrel 30 is attached to the lens mount portion 9.

According to one example, not part of the invention, the second annular portion 32 of the lens barrel 30 is attached to the lens mount portion 9 by the aid of a glue layer 13 between the second annular portion 32 of the lens barrel 32 and the lens mount 9.

According to one example, not part of the invention, the second annular portion 32 of the lens barrel 30 is attached to the lens mount portion 9 by a threaded engagement between an outer threaded surface portion 35 of the lens barrel 3 and an inner threaded surface portion 95 of the lens mount 9.

According to one example, not part of the invention, the front lens 4 is attached to the camera housing portion 2 by the aid of a sealing glue 8.

According to one example, not part of the invention, the image capturing device 1 further comprises an image sensor PCB 15, wherein the heater driver 520 is arranged on the image sensor PCB 15.

According to one example, not part of the invention, the image capturing device 1 further comprises a connection board 10, wherein the heater driver 520 is arranged on the connection board 10.

According to one example, not part of the invention, the camera system further comprising a filter switch 12, wherein the filter switch 12 is housed between the lens barrel 3, and the image sensor PCB 15.

According to one example, not part of the invention, the lens unit comprises a further lens.

According to one example, not part of the invention, the image capturing device 1 further comprising a camera housing portion 2, housing the lens unit 3.

According to one example, not part of the invention, a camera system 100 is provided, the camera system comprising:
an image capturing device 1 further comprising: a camera housing portion 2, housing a lens unit 3, wherein the lens unit 3 comprises a lens barrel 30,
a front lens 4 attached to the camera housing portion 2, whereby the front lens 4 comprises an inner surface 4a facing the lens barrel 30,
a heater device 500, further comprising a lens heater 510 for heating the front lens 4,
wherein the lens heater 510 comprises a transparent conductive coating 512 provided on at least a portion 4a' of the inner surface 4a of the front lens 4.

According to one example, not part of the invention, the front lens 4 is a dome front lens.

According to one embodiment of the invention, A camera system 100 is provided comprising:
an image capturing device 1 further comprising: a lens unit 3, wherein the lens unit 3 comprises a lens barrel 30, a front lens 4 comprising an inner surface 4a facing the lens barrel 30,
a heater device 500, further comprising a lens heater 510 for heating the front lens 4,
wherein an annular heat insulating device 6 is arranged between the lens barrel 30 and the lens heater 510, wherein the lens barrel 30 comprises a first annular portion 31 further comprising an annular support portion 31a for supporting the front lens 4a, wherein the annular support portion 31a faces the front lens 4,
wherein the annular heat insulating device 6 is arranged on the annular support portion 31a.

### Brief description of drawings

The invention is now described, by way of example, with reference to the accompanying drawings, in which:
Fig. 1a shows a cross-section view of a camera system according to one embodiment of the invention.
Fig. 1b shows a cross-section view of a camera system, according to one embodiment of the invention.
Fig. 2a shows a cross-section view of a camera system, according to one embodiment of the invention.
Fig. 2b shows a perspective view of lens barrel of the camera system according to Fig. 2a.
Fig. 2c shows a cross-section view of a camera system, according to one embodiment of the invention.
Fig. 3 shows a cross-section view of a camera system according to one embodiment of the invention.
Fig. 4 shows a cross-section view of camera system according to one embodiment of the present invention.
Fig. 5a-5b shows a vision system comprising a camera system according to any of Fig. 1-4, and a vehicle comprising the vision system.

### Description of embodiments

In the following, a detailed description of the invention will be given. In the drawing figures, like reference numerals designate identical or corresponding elements throughout the several figures. It will be appreciated that these figures are for illustration only and are not in any way restricting the scope of the invention.

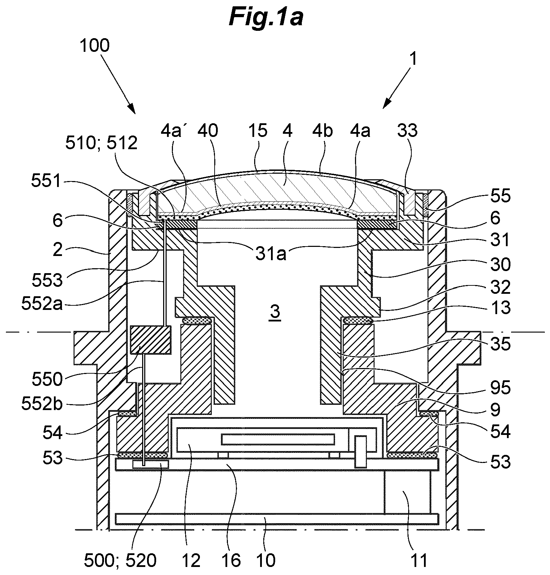

Fig. 1a shows a cross-section view of a camera system 100. According to one embodiment, the camera system 100 comprises an image capturing device 1 further comprising a lens unit 3, wherein the lens unit 3 comprises a lens barrel 30. According to one embodiment, the lens unit 3 comprises a further lens (not shown) which is separate from a front lens 4. According to one embodiment, the image capturing device comprises a first camera housing portion 2, housing the lens unit 3. According to one embodiment, the image capturing device is a camera, or any other electronic device for capturing images.

According to one embodiment, the image capturing device 1 further comprises a lens mount portion 9 for mounting the lens barrel 3 within the camera housing portion 2, wherein a second annular portion 32 of the lens barrel 30 is attached to the lens mount portion 9. According to one embodiment the second annular portion 32 of the lens barrel 30 is attached to the lens mount 9 by the aid of a glue layer 13 between the second annular portion 32 of the lens barrel 32 and the lens mount 9 in e.g. an active alignment process. According to one embodiment, the glue layer 13 is an active alignment glue. According to one embodiment, the second annular portion 32 of the lens barrel 30 is aligned to the lens mount 9 by a threaded engagement between an outer threaded surface portion 35 of the lens barrel 3 and an inner threaded surface portion 95 of the lens mount 9. According to one embodiment, the lens barrel 30 and lens mount portion 9 are integrated and forms one part. A benefit of such structure is to avoid tolerance problems that may be present. According to one embodiment (not shown), the lens mount portion 9 and housing portion 2 is formed in one part. Thus, the lens mount portion 9 and housing are combined and integrated According to this embodiment, a lens protection, is provided as a front cover which is glued into the housing 2and extends until the camera or image capturing unit device 1 front. According to one embodiment, the lens protection is a lens fixation portion 33. According to one embodiment, the image capturing device 1 further comprises an image sensor PCB 16, further comprising an image sensor, wherein a heater driver 520 is arranged on the image sensor PCB 16. According to one embodiment, the image capturing device 1 further comprises a connection board 10. According to one embodiment, the heater driver 520 is arranged on the connection board 10. According to one embodiment, the heater driver 520 is a 3W heater driver configured to defrost six layers of ice at -20° C in 5 mins. According to one embodiment, the connection board 10 is a SER PCB. According to one embodiment, a Board-to-Board (B2B) connector 11, connects the image sensor PCB 16 with the connection board 10. According to one embodiment the camera system 100 further comprising a filter switch 12 for selectively filter UV light depending on lighting conditions, wherein the filter switch 12 is housed between the lens barrel 3, and the image sensor PCB 16. According to one embodiment, heat transfer surfaces 53, 54 are arranged between the image sensor PCB 16 and the lens mount 9 and the lens mount 9 and the housing 2 respectively. According to one embodiment, the heat transfer surfaces 53, 54 enables a heat dissipation from the image sensor PCB 16 thereby functioning as a heat sink. According to one embodiment, a lens fixation portion 33 is configured to fixate the front lens 4 to the lens barrel 30. According to one embodiment, the lens barrel 30 is configured to fixedly engage with the lens fixation portion 33. According to one embodiment, the lens barrel 30 comprises a circumferential groove for receiving a portion of the lens fixation portion 33. According to one embodiment, the lens barrel 30 is fixedly attached to the housing 2 via a glue layer 55 around the circumference of the lens barrel 3, wherein the lens unit 3 is fixedly attached to the housing 2. According to one embodiment, the lens fixation portion 33 covers the lens barrel 30 and is connected to the lens barrel via a threaded engagement between an outer threaded surface portion of the lens barrel 30 and an inner threaded surface portion of the lens fixation portion 33. According to one embodiment, the lens fixation portion 33 is fixedly attached to the housing 2 via a glue layer 55 around the circumference of the lens fixation portion 33. According to one embodiment, the image capturing device 1 comprises a further camera housing portion (not shown) configured to matingly engage with the camera housing portion 2 and thereby enclose the image capturing device 1.

The image capturing device 1 further comprises a front lens 4 comprising an inner surface 4a facing the lens barrel 30. The camera system 100 comprises a heater device 500, further comprising a lens heater 510 for heating the front lens 4. According to one embodiment, the front lens 4 is a glass front lens. According to one embodiment the outside of the front lens 4 is in contact with an external or outside environment. According to one embodiment, a hydrophobic coating 15 is provided on an outer surface 4b of the front lens 4. According to one embodiment, an annular heat insulating device 6 is arranged between the lens barrel 30 and the lens heater 510. One purpose of the heat insulating device 6 is to avoid heat leakage towards the barrel 30, and thereby provide a more efficient heating of the front lens 4. A more efficient heating of the front lens 4 may have at least one of the following positive implications, such as e.g. reduced power consumption, reduced risk of over-heating, reducing the amount of material or coating used in e.g. the lens heater 510 as will be described below. According to some embodiments, a more efficient heating of the front lens may enable the use of a thinner lens heater and/or covering a smaller area of the front lens 4 which furthermore increases the optical transmission. According to one embodiment, the annular heat insulating device 6 has an annular disc shape. According to one embodiment, the heat insulating device 6 is an O-ring. According to one embodiment, the heat insulating device 6 is e.g. made of any of rubber or other thermal isolation material, plastic, ceramic sheet, ceramic plate, two component isolating glue. According to one embodiment, the heat insulating device 6 has a thickness of 0,1 mm≤D≤1,5 mm. According to one embodiment, the heat insulating device 6 has a thickness of 0,1 mm≤D≤1 mm. According to one embodiment, the heat insulating device 6 has a thickness of 0,5 mm≤D≤1 mm.

According to one embodiment, the lens barrel 30 comprises a first annular portion 31, wherein the annular heat insulating device 6 is arranged on the first annular portion 31 of the lens barrel 30. According to one embodiment, the first annular portion 31 comprises an annular support portion 31a, for supporting the front lens 4a, wherein the annular heat insulating device 6 is arranged on the annular support portion 31a. According to one embodiment, the annular heat insulating device 6 has a disc shape with a width of the ring that corresponds to the width of the annular support portion 31a. According to one embodiment, the annular support portion 31a faces the front lens 4.

According to one embodiment, the lens heater 510 further comprises a transparent conductive coating 512 provided on at least a portion 4a' of the inner surface 4a of the front lens 4. According to one embodiment, the lens heater 510 further comprises a transparent conductive coating 512 provided on at least a portion 4a' of the entire inner surface 4a of the front lens 4. According to the embodiment of Fig. 1a, said at least a portion 4a' of the inner surface 4a corresponds to the entire inner surface 4a of the front lens 4. According to one embodiment, the portion 4a' is in the shape of a circular ring of the According to one embodiment, the transparent conductive coating 512 is provided on the entire inner surface 4a of the front lens 4.

According to one embodiment, the heater device 500 further comprises a heater driver 520 and a heater connector 550, wherein the heater connector 550 connects the heater driver 520 with the front lens 4 via contact pads 551 arranged on the transparent conductive coating 512, wherein the heater connector 550 comprises connecting pins 552a, 552b. According to one embodiment, the connecting pins 552a, 552b comprises a first 552a and second 552b pair of connecting pins 552, 552b. According to one embodiment, the connecting pins 552a, 552b extend through at least one opening 553 in the lens barrel 30. According to one embodiment, the at least one opening 553 is sealed from an external environment outside the lens barrel 30 when the connecting pins 552a, 553b extend through the at least one opening 553. As a result, when filling the space between the camera housing 2 and the lens barrel 30 with potting, the potting is prevented from entering the lens barrel 30.

According to one embodiment, the transparent conductive coating 512 is indium tin oxide (ITO). According to one embodiment, the transparent conductive coating 512 has a thickness d in the range of 100 nm. According to one embodiment, the transparent conductive coating 512 provides an optical transmittance of >90%. According to one embodiment, the transparent conductive coating provides an optical transmittance T, 90%≤T<100%. According to one embodiment, the optical transmittance is near 100%.

According to one embodiment, the transparent conductive coating 512 is a resistive pattern coating 513, wherein the transparent conductive coating 512 is arranged on the inner surface 4a of the front lens 4 in a resistive pattern. According to one embodiment, the transparent conductive coating 512 comprises a resistive pattern coating 513. According to one embodiment, the resistive pattern coating provides an optical transmittance of >80%. According to one embodiment, the resistive pattern coating provides an optical transmittance of >90%. According to one embodiment, the resistive pattern coating provides an optical transmittance of >98%. According to one embodiment, the resistive pattern coating provides a higher optical transmittance than the transparent conductive coating 512 being indium tin oxide (ITO). According to one embodiment, the resistive pattern coating is configured to provide a resistance of 400 ohm and a heating power of 3W. According to one embodiment, the lens heater 510 comprises a transparent conductive coating 512 comprising a resistive pattern coating 513 further comprising and integrated with a non pattern conductive coating, e.g. an even coating, wherein said coatings are configured to cover separate portions of the front lens 4.

According to one embodiment, the resistive pattern coating 513 comprises a copper blend. According to one embodiment, the resistive pattern coating 513 comprises small metal traces. According to one embodiment, the resistive pattern coating 513 is arranged to the front lens by a printing process.

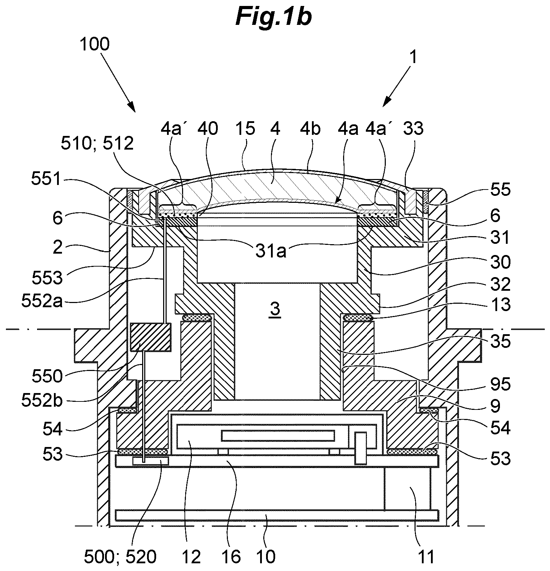

As can be seen in Fig. 1b showing a cross-section view of a camera system 100 according to one embodiment, the lens heater 510 further comprises a transparent conductive coating 512 provided on a portion 4a' of the entire inner surface 4a of the front lens 4. For Fig. 1b as for any of the following figures, which substantially describe similar structures and features, any recurrent and repeated explanation of similar structure or features will be omitted, and the same names and reference numerals will be provided to the similar structure and features.

According to one embodiment, the portion 4a' of the inner surface 4a of the front lens 4 corresponds to an annular surface portion of the front lens 4 covered by lens heater 510. According to one embodiment, the portion 4a' of the inner surface 4a of the front lens 4 corresponds to a width of the ring that corresponds to the width of the annular support portion 31a. According to one embodiment, the portion 4a' corresponds to a circular ring of the front lens 4. According to one embodiment, the portion 4a' corresponds to a part of a circular ring or annulus of the front lens 4. According to one embodiment, the portion 4a' is divided in a plurality of separate portions corresponding to separate parts of a circular ring or annulus of the front lens 4. According to one embodiment, the portion 4a' comprises two separate portions. According to one embodiment, the separate portions are divided by two straight cut-outs. According to one embodiment, the cut-outs corresponds to a cut-out of the lens 4. According to one embodiment, the separate portions forms annular sectors defined by an angle. Covering only a portion of the inner surface 4a of the front lens is beneficial in that it provides an improved optical transmission through the lens. According to one embodiment, the portion 4a' of the inner surface 4a of the front lens 4 is a sub-portion of the entire inner surface 4a of the front lens 4, wherein the transparent conductive coating 512 is provided solely on the sub-portion of the inner surface 4a of the front lens. According to one embodiment, the sub-portion 4a' provided with a transparent conductive coating 512 covers a range of 5%-90%, more preferably 10%-80%, most preferably 15%-70% of the inner surface 4a of the front lens 4. According to the one embodiment, the resistive pattern coating 513 is provided on the sub-portion 4a' according to what has been described for the transparent conductive coating 512 above, i.e. when the transparent conductive coating 512 is a resistive pattern coating 513. According to one embodiment, a combination of a resistive pattern coating 513 and a non pattern conductive coating of the transparent coating 512 is provided on the sub-portion 4a' according to what has been described for the transparent conductive coating 512 above.

According to one embodiment, an anti-reflective (AR) layer 40 is arranged between the lens heater 510 and the front lens 4. According to one embodiment, the transparent conductive coating 512 is integrated into the anti-reflective layer 40. Such integration further mitigates the adverse effect of the ITO on light transmission.

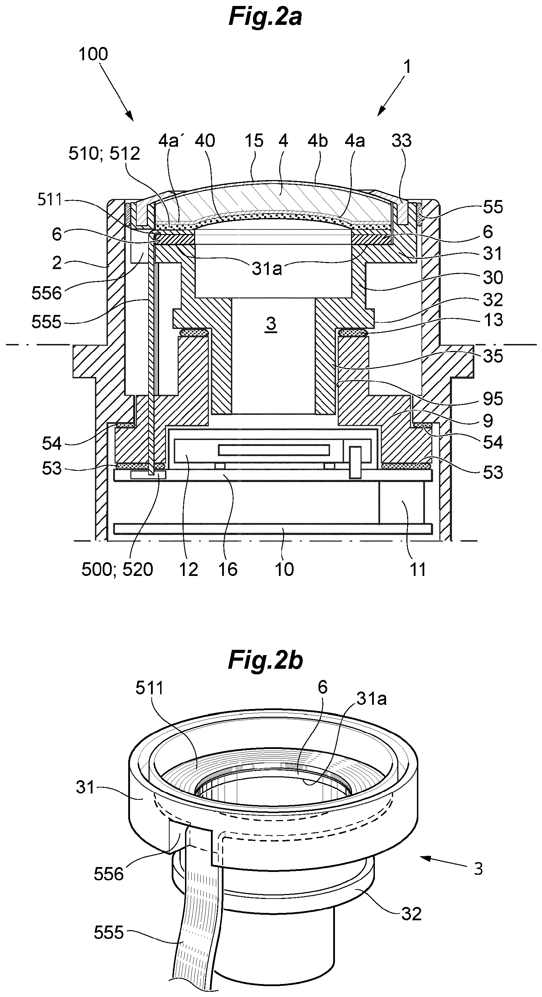

Fig. 2a shows a cross-section view of camera system 100. According to one embodiment, the lens heater 510 further comprises an annular heater disc 511, wherein the annular heater disc 511 is arranged between the annular heat insulating device 6 and at least a portion of the inner surface 4a of the front lens 4. According to one embodiment, the annular heater disc 511 is arranged between the annular heat insulating device 6 and a transparent conductive coating 512 provided on at least a portion 4a' of the inner surface 4a of the front lens 4. According to the embodiment of Fig. 2a, in a similar manner as in Fig. 1a, said at least a portion 4a' of the inner surface 4a corresponds to the entire inner surface 4a of the front lens 4.

According to one embodiment, the annular heater disc 511 is configured to provide an electrical connection to the transparent conductive coating 512. According to one embodiment, the annular heater disc is configured to provide an electrical connection between the heater driver 520 and the transparent conductive coating 512. According to one embodiment, the annular heater disc provides an electrical connection to the transparent conductive coating 512, e.g. providing an electrical connection between the heater driver 520 and the transparent conductive coating, via contact pads 551 arranged on the transparent conductive coating 512. According to one embodiment, the contact pads 551 are formed at certain contact points on the annular heater disc. According to one embodiment, the contact points are arranged on the upper portion of the annular heater disc facing or configured to face the transparent conductive coating. According to one embodiment, the annular heater disc 511 is configured to provide an electrical connection between lens heater 510 and the transparent conductive coating 512. According to one embodiment the annular heater disc is a flexible electrode.

Fig. 2b shows a perspective view of lens barrel 30 according to Fig. 2a except the front lens 4. Furthermore, the FPC connector 555 extends through the opening 556 in the lens barrel 31 is shown herein.

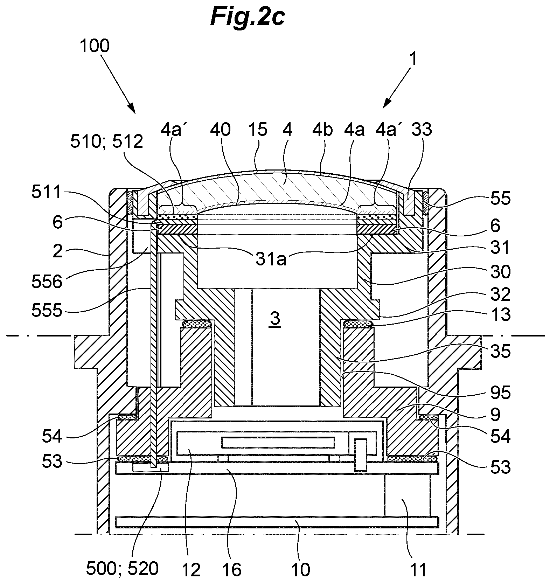

As can be seen in Fig. 2c showing a cross-section view according to one embodiment of a camera system 100, the at least one portion 4a' of the inner surface 4a of the front lens 4 corresponds to an annular surface portion of the front lens 4 covered by lens heater 510 in an analogous manner as Fig. 1b. According to one embodiment, the area not coated by the transparent conductive coating, i.e. an uncoated or free area, corresponds to the vision cone area. As a result of covering at least a portion 4a' or a sub-portion 4a', the optical transmittance is enhanced as transmission through the vision area is not adversely affected by a transparent conductive coating.

According to one embodiment, the heater device 500 further comprises a heater driver 520 and a heater connector 550, wherein the heater connector 550 connects the heater driver 520 with the annular heater disc 511 wherein the heater connector 550 comprises a flexible electrical FPC or FPCB connector 555. According to one embodiment the annular heater disc is a flexible connector integrated with the FPC connector. According to one embodiment, the FPC connector 555 comprises contact pads in the shape of annular sectors connecting with the annular heater disc 511. According to one embodiment, the FPC connector comprises two contact pads in the form of annular sectors. According to one embodiment, the annular sectors are defined by, or are spanned by, an angle of 90°, respectively. According to one embodiment, the FPC connector 555 extend through an opening 556 in the lens barrel 30. According to one embodiment, the opening 556 is sealed from an external environment outside the lens barrel 30 when the FPC connector extend through the at least one opening 556. As a result, when filling the space between the camera housing 2 and the lens barrel 30 with potting, the potting is prevented from entering the lens barrel 30. According to one embodiment the camera system 100 is designed to be waterproof. In order to achieve waterproofness, plastic mechanical parts are arranged and filled tightly in the opening 556 around the FPC connector 555. According to one embodiment, an O-ring is provided between the lens 4 and the lens fixation portion 33, and the lens barrel 30, wherein the O-ring interconnects the lens 4, the lens fixation portion 33 and the lens barrel 33.

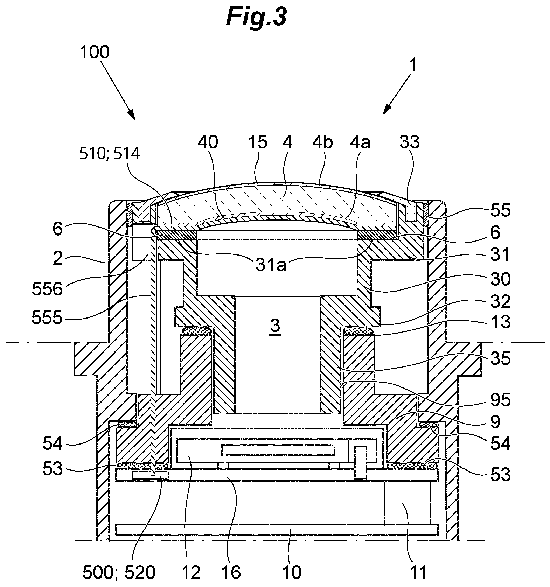

Fig. 3 shows a cross-section view of a camera system 100, wherein the lens heater 510 further comprises a conductive transparent heater film 514 provided on the inner surface 4a of the front lens 4. According to one embodiment, the transparent heater film 514 is bonded to the inner surface 4a of the front lens 4. According to one embodiment, the bonding is enabled by a polycarbonate resin and/or a polycarbonate substrate and/or HTR N for thermoforming. According to one embodiment, the transparent heater film 514 is a 3D shaped CNB^{™} heater by Canatu. According to one embodiment, the heater device 500 further comprises a heater driver 520 and a heater connector 505, wherein the heater connector 505 connects the heater driver 520 with the transparent heater film 514, wherein the heater connector comprises a ZIF connector. According to one embodiment, the heater connector comprises a flexible electrical FPC connector 555. According to one embodiment, the FPC connector 555 or ZIF connector 557 extend through an opening in the lens barrel 30. According to one embodiment, the opening 556 is sealed from an external environment outside the lens barrel 30 when the FPC connector or ZIF connector extend through the at least one opening 556. As a result, when filling the space between the camera housing 2 and the lens barrel 30 with potting, the potting is prevented from entering the lens barrel 30.

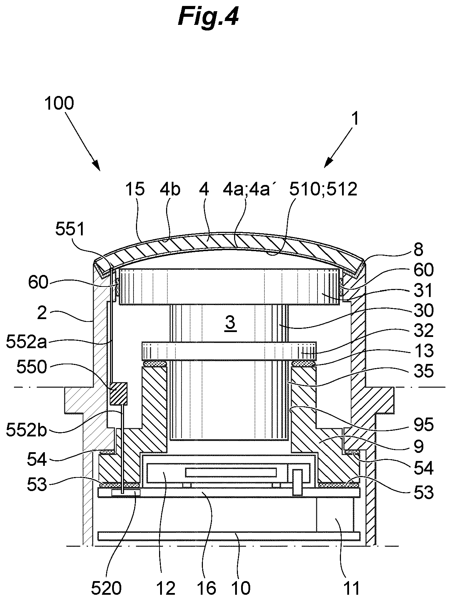

Fig. 4 shows an alternative embodiment of the invention, disclosing a camera system 100 comprising: an image capturing device 1 further comprising: a camera housing portion 2, housing a lens unit 3, wherein the lens unit 3 comprises a lens barrel 30, a front lens 4 attached to the camera housing portion 2, whereby the front lens 4 comprises an inner surface 4a facing the lens barrel 30, a heater device 500, further comprising a lens heater 510 for heating the front lens 4, wherein the lens heater 510 comprises a transparent conductive coating 512 provided on at least a portion 4a' of the inner surface 4a of the front lens 4. According to one embodiment, an annular heat insulating device 6 is provided between the housing 2 and the front lens 4. According to one embodiment, the heat insulating device 6 is an isolator. According to one embodiment, the heat insulating device 6 is a glue 8 with heat insulating capabilities. According to one embodiment, the glue 8 with heat insulating capabilities is configured to fixedly attaching the front lens 4 to the housing 2. According to one embodiment, the front lens 4 is fixedly attached to the camera housing portion 2 by the aid of the glue 8. According to one embodiment, the glue 8 is a sealing glue.

According to one embodiment, the front lens 4 is a dome front lens.

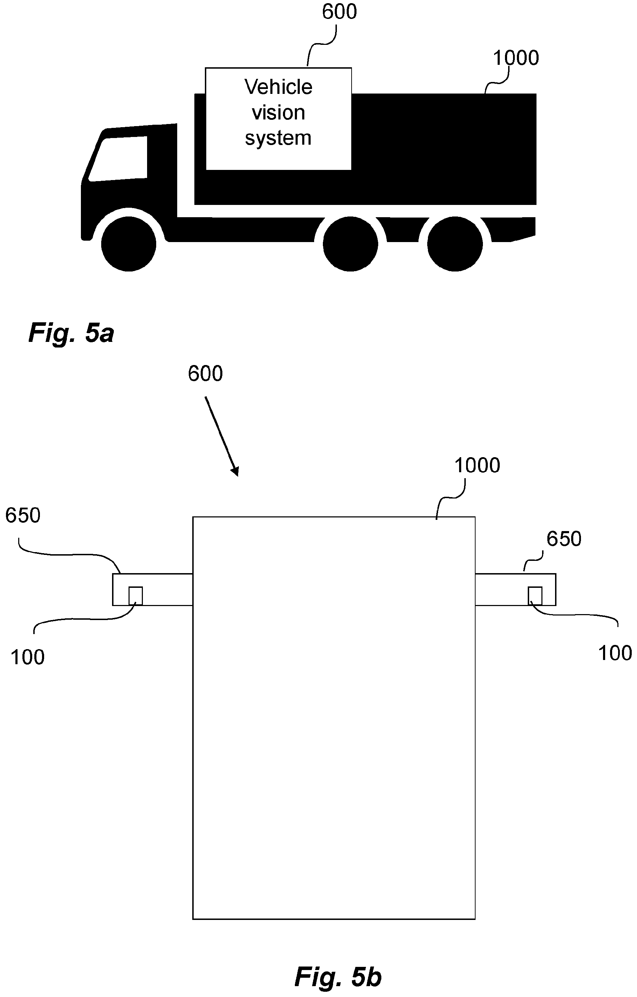

According to one embodiment, as can be seen in Fig. 5a, the camera system 100 is configured to be arranged in a vision system 600 of a vehicle 1000 for providing exterior rear view for a vehicle driver. According to one embodiment, the vision system 600 is a camera mirror system replacing at least one of all mirrors of a vehicle or truck 600, corresponding to class II/IV/V/VI mirrors. According to one embodiment, as can be seen in Fig. 5b, the camera system 100 is arranged in a rear view camera arm 650 attached to a vehicle 1000 e.g. on opposite sides of the vehicle. The front lens 4 may be configured to provide a horizontal field of view (HFOV) depending on its intended use, placement and legally required coverage around the vehicle class II/IVIV/VI. According to one embodiment, the front lens is selected to have a HFOV of 60°, 85-90°, 120°, 185°.

A preferred embodiment of a camera system 100 according to the invention has been described. However, the person skilled in the art realizes that this can be varied within the scope of the appended claims without departing from the inventive idea.

All the described alternative embodiments above or parts of an embodiment can be freely combined without departing from the inventive idea as long as the combination is not contradictory and whithin the scope of the appended claims.

## Claims

1. A camera system (100) comprising:
an image capturing device (1) further comprising: a lens unit (3), wherein the lens unit (3) comprises a lens barrel (30), a front lens (4) comprising an inner surface (4a) facing the lens barrel (30),
a heater device (500), further comprising a lens heater (510) for heating the front lens (4),
wherein an annular heat insulating device (6) is arranged between the lens barrel (30) and the lens heater (510), wherein the lens barrel (30) comprises a first annular portion (31) further comprising an annular support portion (31a) for supporting the front lens (4a), wherein the annular support portion (31a) faces the front lens (4), wherein the annular heat insulating device (6) is arranged on the annular support portion (31a).

2. The camera system (100) according to any of the preceding claims, wherein the lens heater (510) comprises a transparent conductive coating (512) provided on at least a portion (4a') of the inner surface (4a) of the front lens (4).

3. The camera system (100) according to claim 2, wherein said at least a portion 4a' of the inner surface (4a) of the front lens (4) is a sub-portion of the inner surface (4a) of the front lens (4), wherein the transparent conductive coating (512) is provided solely on the sub-portion of the inner surface (4a) of the front lens (4).

4. The camera system (100) according to any of the preceding claims 2-3, wherein the lens heater (510) comprises an annular heater disc (511), wherein the annular heater disc (511) is arranged between the annular heat insulating device (6) and said at least a portion of the inner surface (4a) of the front lens (4) and is configured to provide an electrical connection to the transparent conductive coating (512).

5. The camera system (100) according to any preceding claims 2-4, wherein the transparent conductive coating (512) is indium tin oxide (ITO).

6. The camera system (100) to any preceding claims 2-5, wherein the transparent conductive coating (512) is a resistive pattern coating (513) provided on the inner surface (4a) of the front lens (4).

7. The camera system (100) according to claim 1, wherein the lens heater (510) comprises a transparent heater film (514) provided on the inner surface (4a) of the front lens (4).

8. The camera system (100) according to any of the preceding claims 2-3, 5-6, wherein the heater device (500) further comprises a heater driver (520) and a heater connector (550), wherein the heater connector (550) connects the heater driver (520) with the front lens (4) via contact pads (551) arranged on the transparent conductive coating (512), wherein the heater connector (550) comprises connecting pins (552a, 552b).

9. The camera system 100 according to any of the preceding claims 4-6, wherein the heater device (500) further comprises a heater driver (520) and a heater connector (550), wherein the heater connector (550) connects the heater driver (520) with the annular heater disc (511), wherein the heater connector comprises an FPC connector (555).

10. The camera system (100) according to any of the preceding claims, wherein the annular heat insulating device (6) has an annular disc shape.

11. The camera system (100) according to any of the preceding claims, wherein the heat insulating device (6) is an O-ring.

12. The camera system (100) according to any preceding claims, wherein a hydrophobic coating (15) is provided on an outer surface (4b) of the front lens (4).

## Patentansprüche

1. Kamerasystem (100), umfassend:
eine Bildaufnahmevorrichtung (1), weiter umfassend: eine Linseneinheit (3), wobei die Linseneinheit (3) einen Linsentubus (30) und eine vordere Linse (4), umfassend eine dem Linsentubus (30) zugewandte Innenfläche (4a), umfasst,
eine Heizvorrichtung (500), weiter umfassend eine Linsenheizung (510) zum Erwärmen der vorderen Linse (4),
wobei eine ringförmige Wärmeisoliervorrichtung (6) zwischen dem Linsentubus (30) und der Linsenheizung (510) angeordnet ist, wobei der Linsentubus (30) einen ersten ringförmigen Abschnitt (31) umfasst, der weiter einen ringförmigen Stützabschnitt (31a) zum Stützen der vorderen Linse (4a) umfasst, wobei der ringförmige Stützabschnitt (31a) der vorderen Linse (4) zugewandt ist, wobei die ringförmige Wärmeisoliervorrichtung (6) auf dem ringförmigen Stützabschnitt (31a) angeordnet ist.

2. Kamerasystem (100) nach einem der vorstehenden Ansprüche, wobei die Linsenheizung (510) eine transparente leitfähige Beschichtung (512) umfasst, die auf mindestens einem Abschnitt (4a') der Innenfläche (4a) der vorderen Linse (4) bereitgestellt ist.

3. Kamerasystem (100) nach Anspruch 2, wobei der mindestens eine Abschnitt 4a' der Innenfläche (4a) der vorderen Linse (4) ein Teilabschnitt der Innenfläche (4a) der vorderen Linse (4) ist, wobei die transparente leitfähige Beschichtung (512) ausschließlich auf dem Teilabschnitt der Innenfläche (4a) der vorderen Linse (4) bereitgestellt ist.

4. Kamerasystem (100) nach einem der vorstehenden Ansprüche 2-3, wobei die Linsenheizung (510) eine ringförmige Heizscheibe (511) umfasst, wobei die ringförmige Heizscheibe (511) zwischen der ringförmigen Wärmeisoliervorrichtung (6) und dem mindestens einen Abschnitt der Innenfläche (4a) der vorderen Linse (4) angeordnet ist und dazu konfiguriert ist, eine elektrische Verbindung mit der transparenten leitfähigen Beschichtung (512) bereitzustellen.

5. Kamerasystem (100) nach einem der vorstehenden Ansprüche 2-4, wobei die transparente leitfähige Beschichtung (512) Indiumzinnoxid (ITO) ist.

6. Kamerasystem (100) nach einem der vorstehenden Ansprüche 2-5, wobei die transparente leitfähige Beschichtung (512) eine Widerstandsmusterbeschichtung (513) ist, die auf der Innenfläche (4a) der vorderen Linse (4) bereitgestellt ist.

7. Kamerasystem (100) nach Anspruch 1, wobei die Linsenheizung (510) eine transparente Heizfolie (514) umfasst, die auf der Innenfläche (4a) der vorderen Linse (4) bereitgestellt ist.

8. Kamerasystem (100) nach einem der vorstehenden Ansprüche 2-3, 5-6, wobei die Heizvorrichtung (500) weiter einen Heiztreiber (520) und einen Heizverbinder (550) umfasst, wobei der Heizverbinder (550) den Heiztreiber (520) über Kontaktpads (551), die auf der transparenten leitfähigen Beschichtung (512) angeordnet sind, mit der vorderen Linse (4) verbindet, wobei der Heizverbinder (550) Verbindungsstifte (552a, 552b) umfasst.

9. Kamerasystem (100) nach einem der vorstehenden Ansprüche 4-6, wobei die Heizvorrichtung (500) weiter einen Heiztreiber (520) und einen Heizverbinder (550) umfasst, wobei der Heizverbinder (550) den Heiztreiber (520) mit der ringförmigen Heizscheibe (511) verbindet, wobei der Verbinder einen FPC-Verbinder (555) umfasst.

10. Kamerasystem (100) nach einem der vorstehenden Ansprüche, wobei die ringförmige Wärmeisoliervorrichtung (6) eine ringförmige Scheibenform aufweist.

11. Kamerasystem (100) nach einem der vorstehenden Ansprüche, wobei die Wärmeisoliervorrichtung (6) ein O-Ring ist.

12. Kamerasystem (100) nach einem vorstehenden Anspruch, wobei eine hydrophobe Beschichtung (15) auf einer Außenfläche (4b) der vorderen Linse (4) bereitgestellt ist.

## Revendications

1. Système de caméra (100) comprenant :
un dispositif de capture d'image (1), comprenant en outre : une unité d'objectif (3), dans lequel l'unité d'objectif (3) comprend un barillet d'objectif (30), un objectif avant (4) comprenant une surface interne (4a) faisant face au barillet d'objectif (30),
un dispositif de chauffage (500), comprenant en outre un dispositif de chauffage d'objectif (510) pour chauffer l'objectif avant (4),
dans lequel un dispositif d'isolation thermique annulaire (6) est agencé entre le barillet d'objectif (30) et le dispositif de chauffage d'objectif (510), dans lequel le barillet d'objectif (30) comprend une première partie annulaire (31) comprenant en outre une partie de support annulaire (31a) pour supporter l'objectif avant (4a), dans lequel la partie de support annulaire (31a) fait face à l'objectif avant (4), dans lequel le dispositif d'isolation thermique annulaire (6) est agencé sur la partie de support annulaire (31a).

2. Système de caméra (100) selon l'une quelconque des revendications précédentes, dans lequel le dispositif de chauffage d'objectif (510) comprend un revêtement conducteur transparent (512) prévu sur au moins une partie (4a') de la surface interne (4a) de l'objectif avant (4).

3. Système de caméra (100) selon la revendication 2, dans lequel ladite au moins une partie 4a' de la surface interne (4a) de l'objectif avant (4) est une sous-partie de la surface interne (4a) de l'objectif avant (4), dans lequel le revêtement conducteur transparent (512) est prévu uniquement sur la sous-partie de la surface interne (4a) de l'objectif avant (4).

4. Système de caméra (100) selon l'une quelconque des revendications 2 à 3 précédentes, dans lequel le dispositif de chauffage d'objectif (510) comprend un disque de chauffage annulaire (511), dans lequel le disque de chauffage annulaire (511) est agencé entre le dispositif d'isolation thermique annulaire (6) et ladite au moins une partie de la surface interne (4a) de l'objectif avant (4) et est configuré pour fournir une connexion électrique au revêtement conducteur transparent (512).

5. Système de caméra (100) selon l'une quelconque des revendications 2 à 4 précédentes, dans lequel le revêtement conducteur transparent (512) est de l'oxyde d'indium-étain (ITO).

6. Système de caméra (100) selon l'une quelconque des revendications 2 à 5 précédentes, dans lequel le revêtement conducteur transparent (512) est un revêtement à motif résistif (513) prévu sur la surface interne (4a) de l'objectif avant (4).

7. Système de caméra (100) selon la revendication 1, dans lequel le dispositif de chauffage d'objectif (510) comprend un film chauffant transparent (514) prévu sur la surface interne (4a) de l'objectif avant (4).

8. Système de caméra (100) selon l'une quelconque des revendications précédentes 2 à 3, 5 à 6, dans lequel le dispositif de chauffage (500) comprend en outre un dispositif de pilotage de chauffage (520) et un connecteur de dispositif de chauffage (550), dans lequel le connecteur de dispositif de chauffage (550) relie le dispositif de pilotage de chauffage (520) à l'objectif avant (4) via des plots de contact (551) agencés sur le revêtement conducteur transparent (512), dans lequel le connecteur de dispositif de chauffage (550) comprend des broches de connexion (552a, 552b).

9. Système de caméra 100 selon l'une quelconque des revendications 4 à 6 précédentes, dans lequel le dispositif de chauffage (500) comprend en outre un dispositif de pilotage de dispositif de chauffage (520) et un connecteur de dispositif de chauffage (550), dans lequel le connecteur de dispositif de chauffage (550) relie le dispositif de pilotage de dispositif de chauffage (520) au disque de chauffage annulaire (511), dans lequel le connecteur de dispositif de chauffage comprend un connecteur FPC (555).

10. Système de caméra (100) selon l'une quelconque des revendications précédentes, dans lequel le dispositif d'isolation thermique annulaire (6) présente une forme de disque annulaire.

11. Système de caméra (100) selon l'une quelconque des revendications précédentes, dans lequel le dispositif d'isolation thermique (6) est un joint torique.

12. Système de caméra (100) selon l'une quelconque des revendications précédentes, dans lequel un revêtement hydrophobe (15) est prévu sur une surface extérieure (4b) de l'objectif avant (4).
